# EUROPEAN PATENT SPECIFICATION

(11) **EP 4 477 562 B1**
(45) Date of publication and mention of the grant of the patent: **07.10.2026**
(21) Application number: 24182530.6
(22) Date of filing: 17.06.2024
(51) Int. Cl.: B64G 1/26, B64G 1/40, B64G 1/50, B64G 1/66, F16M 11/12, H01Q 1/28, H01Q 3/08, B64G 1/64

(54) **TWO AXIS POINTING MECHANISM**
ZWEIACHSIGER ZEIGEMECHANISMUS
MÉCANISME DE POINTAGE À DEUX AXES

(30) Priority: 15.06.2023 US 202363508352 P
(43) Date of publication of application: 18.12.2024
(73) Proprietor: MacDonald, Dettwiler and Associates Corporation, Ste-Anne-de-Bellevue, QC H9X 3R2 (CA)
(72) Inventor: Desrosiers, Étienne, Sainte-Anne-de-Bellevue, Quebec, H9X 3R2 (CA); Horth, Richard, Sainte-Anne-de-Bellevue, Quebec, H9X 3R2 (CA); Marcotte, Xavier, Sainte-Anne-de-Bellevue, Quebec, H9X 3R2 (CA); St-Andre, Stephane, Sainte-Anne-de-Bellevue, Quebec, H9X 3R2 (CA); Verreault, Marc-André, Sainte-Anne-de-Bellevue, Quebec, H9X 3R2 (CA)
(74) Representative: Grünecker Patent- und Rechtsanwälte PartG mbB

(56) References cited:
- AT-U1- 3 647
- US-A- 6 032 904
- US-A1- 2002 033 796
- US-A1- 2014 174 214
- US-A1- 2016 200 456
- US-A1- 2018 273 215
- US-A1- 2021 399 403

## Description

### Technical Field

The following relates generally to pointing mechanisms, and more particularly to a two axis pointing mechanism.

### Introduction

Systems or mechanisms which operate in space often face the challenges of being launched and deployed remotely as well as functioning and existing in the environment of space. Components may need to work at low temperatures and high temperatures, in high radiation environments and be protected or strong enough to withstand impact from micrometeoroid and orbital debris (MMOD).

Equipment on spacecraft are usually held in place during transportation and launch by Hold Down Release Mechanisms (HDRM) which must be released before the equipment can be used for its purpose. However, this requires extra mass on the spacecraft and extra steps which must be reliably carried out before the equipment can function.

Spacecraft have payloads that are required to be pointed in a specific direction, such as propulsion mechanisms, cameras, antennae, and lasers. However, existing pointing systems can have shortcomings. For example, propulsion mechanisms may include an array of thrusters immovably pointed in different directions which enable movement in a particular direction by choosing which thrusters to employ. This requires a large number of thrusters which increases the mass of the spacecraft and may result in imprecise movement which limits the maneuvers a spacecraft can complete. A movable thruster could reduce the number of thrusters required and therefore the mass of the propulsion system.

Accordingly, there is a need for improved systems and methods for pointing various payloads that overcome disadvantages of existing systems and methods.
US 2002/0033796 A1 relates to support and point a load on a support element, the pointing device comprises distinct link arms distributed around the load. Each link arm comprises a flexible element having a first end connected to the support element via a first hinge having a single degree of freedom, and a second end connected to the load via a second hinge having a single degree of freedom. The pointing device also comprises at least one movement transmission means disposed between the support element and the load to point the load relative to the support element.
US006032904A relates to a three-axis stabilized spacecraft having roll, pitch, and yaw axes and when on station in orbit about the earth having a north face and a south face is equipped with a first and second thruster which may be electric thrusters. A first support device mounts the first thruster adjacent the north face and the first thruster is positioned a spaced distance away from the north face in a first direction parallel to the pitch axis and spaced from the pitch axis in a second direction normal to the pitch axis. A second support device mounts the second thruster adjacent the south face, the second thruster being positioned a spaced distance away from the south face in a third direction opposite the first direction and spaced from the pitch axis in the second direction. A gimbal mechanism pivotally mounts the first and second thrusters on the first and second support devices, respectively, for selectively positioning the attitude of the first and second thrusters. The spacecraft includes a system for performing one or more operations including the following: thrusting along the yaw axis to assist in reaching a geosynchronous orbit; reducing the stored angular momentum of the momentum wheels; and north-south station keeping of the spacecraft.
US 2018/0273215 A1 relates to a spacecraft includes a spacecraft main body, including payload equipment disposed on an inner panel surface of at least one radiator panel, the at least one radiator panel having an exterior-facing outer panel surface. The spacecraft includes at least one electric thruster disposed proximate to an aft facing panel of the spacecraft main body. The at least one electric thruster is thermally coupled with the at least one radiator panel by way of a thermally conductive path.

US 2021/399403 A1 discloses an antenna pointing system.

### Summary

The invention is defined by the independent claim.

The connection between the pedestal and the support plate may be a spherical bearing or may be universal joint.

An anti-rotation bar may be movably connected to the support plate on one end and movably connected to the baseplate of the other end to control the movement of the support plate around a third rotational degree of freedom.

The payload may be a thruster.

The system may further comprise at least one piping routed around the exterior of the pedestal in a helical configuration to supply gas to the thruster.

The at least one piping may comprise a single piece.

The system may further comprise a plurality of harnesses which may be routed through the pedestal.

At least one harness of the plurality of harnesses may be mobile to allow for movement of the support plate during pointing.

The thermal control system may include a radiator attached to the support plate.

At least one surface of the support plate may act as a thermal radiator.

The thermal control system may include a thermal shield attached to the support plate between the support plate and the payload.

The thermal control system may include at least one heater.

The thermal control system may include at least one thermistor to manage temperature.

The payload may include a laser, a camera, and/or an antenna.

The first rotary actuator and the second rotary actuator may hold the payload in place during launch and transportation.

The system may further comprise a plurality of covers to protect from micrometeoroid and orbital debris (MMOD).

Other aspects and features will become apparent to those ordinarily skilled in the art upon review of the following description of some exemplary embodiments.

### Brief Description of the Drawings

The drawings included herewith are for illustrating various examples of articles, methods, and apparatuses of the present specification. In the drawings:
Figure 1 is a block diagram of a two-axis pointing system, according to an embodiment;
Figure 2 is a front perspective view of a two-axis pointing system, according to an embodiment;
Figure 3 is a side view of a rotary actuator connected to a support plate by a linkage, according to an embodiment;
Figure 4 is a perspective view of monoball link between a pedestal and a support plate of a two-axis pointing system, according to an embodiment;
Figure 5 is a perspective view of a pedestal of a two-axis pointing system and associated gas tubing and harness systems thereon and therein, according to an embodiment; and
Figure 6 is a perspective view of a harness systems within a pedestal of a two-axis pointing system, according to an embodiment;

### Detailed Description

Various apparatuses or processes will be described below to provide an example of each claimed embodiment.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to pointing mechanisms, and more particularly to a two axis pointing mechanism for space payloads.

Any system or mechanism which operates in space faces the challenges of being launched and deployed remotely as well as functioning and existing in the environment of space. Components may need to work at low temperatures and high temperatures, high radiation environments and be protected or strong enough to withstand impact from micrometeoroid and orbital debris (MMOD).

As discussed above, conventionally, equipment on spacecraft including thrusters are held in place during transportation and launch by a Hold Down Release Mechanism (HDRM) which must be released before the equipment can be used for its purpose. However, this requires extra mass on the spacecraft and extra steps which must be reliably carried out before the equipment can function. If the HDRM does not work the equipment is useless or must be repaired at great cost.

The present disclosure provides a two-axis pointing system that addresses challenges and shortcomings associated with existing systems. The present disclosure overcomes disadvantages associated with existing pointing systems by, for example, not using HDRMs and routing some components within the system, protected from space.

The two-axis pointing system of the present disclosure employs a two-axis pointing mechanism to support and steer a payload. In embodiments, the mechanism architecture is based, in part, on US Patent No. 9,172,128 and EP patent No. 2,608,313. In the embodiments shown and discussed herein, the payload of the two-axis pointing system is a thruster and the system is referred to as a two-axis thruster pointing system. The thruster may be a Hall Effect Thruster (HET). In other embodiments, the payload may be any equipment or mechanism which requires or uses pointing. For example, the payload may include an antenna, a laser, a camera, etc.

The two-axis thruster pointing system provides a spacecraft with a simple two-axis steerable electric propulsion capability. The use of a mechanism such as the two-axis pointing mechanism to point an electric thruster may reduce the number of thrusters which are conventionally required to perform the same function and may improve maneuverability with a variable spacecraft center of gravity for simple on-station maneuvers (OSM) and Electric Orbit Raising (EOR) operations. The use of thruster mounted on a two-axis thruster pointing mechanism may allow for reduction in propellant mass, therefore increasing the maximum allowable mass dry of the other components of the spacecraft. This electric propulsion - two-axis thruster pointing system can be used for key applications such as: telecommunications, space exploration, human flight, science, earth observation, and/or navigation.

The two-axis thruster pointing system is a versatile, highly reliable system without HDRMs. The two-axis thruster pointing system is capable of re-pointing thrusters continuously during the life of the thruster.

Instead of HRDMs, the two-axis pointing mechanism includes a plurality of rotary actuators for holding a payload in place during launch and transportation. Without a complex HDRM, costs can be significantly reduced and the reliability of the equipment is increased. The system can also be returned to a stowed position, which is not possible with a HDRM.

In an example, a spacecraft with the two-axis thruster pointing system can be launched with the thrusters in a stowed configuration without a HRDM. The thruster can then be used to place the spacecraft into orbit by pointing the thruster along the satellite z-axis. Then the thruster can be pointed during operation to control inclination, longitude, eccentricity, and angular momentum. The two-axis thruster pointing mechanism can also be used for de-orbiting or parking the spacecraft at the end of life (EoL).

The two-axis pointing system includes piping and harnesses that are routed (at least partially and generally where possible) internally, minimizing exposure to radiation, managing thermal aspects, reducing MMOD impact risk, and maintaining a compact form, while keeping full flexibility on the mechanism pointing range. Each piece of piping may be a single continuous piece to minimize pressure drop and leaking. That is, a piping used for a single purpose (e.g., delivering gas) may be a single piece without any joining together of pieces to create the entire pipeline (e.g., a single piece of metal piping). The piping includes a gas line. In an embodiment, the gas line piping employs a corkscrew or helical shape around components of the two-axis pointing mechanism, allowing for the full two-axis pointing range to be achieved without interference from gas components. That is, some elements of the piping or harnesses are mobile to accommodate the two-axis dynamic motion of the two-axis pointing system. In other embodiments, the piping may have any shape which is required for the piping to pass around the various components of the payload pointing system and connect the payload to a flow control system (e.g., connect gas piping to a thruster). In other embodiments, the piping may comprise more than one piece of the material of the piping (e.g., multiple pieces of rigid metal piping may be connected together).

The two-axis pointing system includes an integrated thermal control system. The two axis-pointing system includes a support plate upon which a payload is mounted and which is connected to two rotary actuators which move the support plate up and down at two different attachment points to point the thruster. The thermal control system may be integrated into the support plate or may be appended to the support plate. That is, the support plate may act as a passive thermal radiator, or the thermal control system may include a radiator assembly. Regardless of which component(s) acts as the thermal radiator, the radiator has a sufficient surface area facing space to radiate heat into space. The thermal control system includes a thermal shield (e.g., Kapton coated with vacuum deposited aluminum) positioned between the payload and the support plate. The thermal shield provides resistance to radiated heat from other components of the two-axis pointing system. Integration of the thermal control system components, including the thermal radiator and thermal shield with the pedestal of the two-axis pointing system, allows for a variety of applications of the two-axis pointing system. For example, the system could be used for camera applications which require low power but are temperature sensitive, or could be used for HET applications which are highly dissipative and have high temperature hardware.

The thermal control system also includes resistive heaters that are operated using feedback from thermistors to manage the temperatures of various components. The thermal control system improves the reliability of the two-axis pointing system by thermally decoupling the rotary actuators from the hot payload (e.g., a thruster).

The two-axis pointing system has a large pointing range within a small envelope. The two-axis pointing system has a large payload capacity and a relatively small support system mass. The two-axis pointing system includes a spherical bearing ("monoball"), connecting the support plate to the pedestal which constrains three degrees of freedom, a first rotary actuator connected to the support plate controlling a fourth degree of freedom, a second rotary actuator connected to the support plate controlling a fifth degree of freedom, and an anti-rotation bar controlling the sixth degree of freedom which enables the large pointing range, small envelope, and large payload capacity. The monoball provides a fixed pivoting point to a payload close to its center of mass. The rotary actuators move the payload up and down along their respective axes. In an embodiment where the payload is a thruster, the anti-rotation bar blocks the rotation of the thruster around the thrust vector.

In other embodiments, the support plate may be connected to the pedestal by a different connection than a spherical bearing, for example a universal joint which would then control 4 of the 6 degrees of freedom of the support plate.

The two-axis pointing system is designed to be flexible enough to support thrusters (or other payloads) and integrate with spacecrafts of various designs and from many different manufacturers. The two-axis pointing system is compact and can be easily integrated into any type of spacecraft and easily adapted to a spacecraft interface as the footprint of the pedestal and rotary actuators can be modified.

In some embodiments, the two-axis pointing mechanism may be implemented on a LEO, MEO, or GEO satellite using an electrical propulsion system. In some embodiments, the two-axis pointing mechanism may be implemented on traditional or low cost constellation satellites.

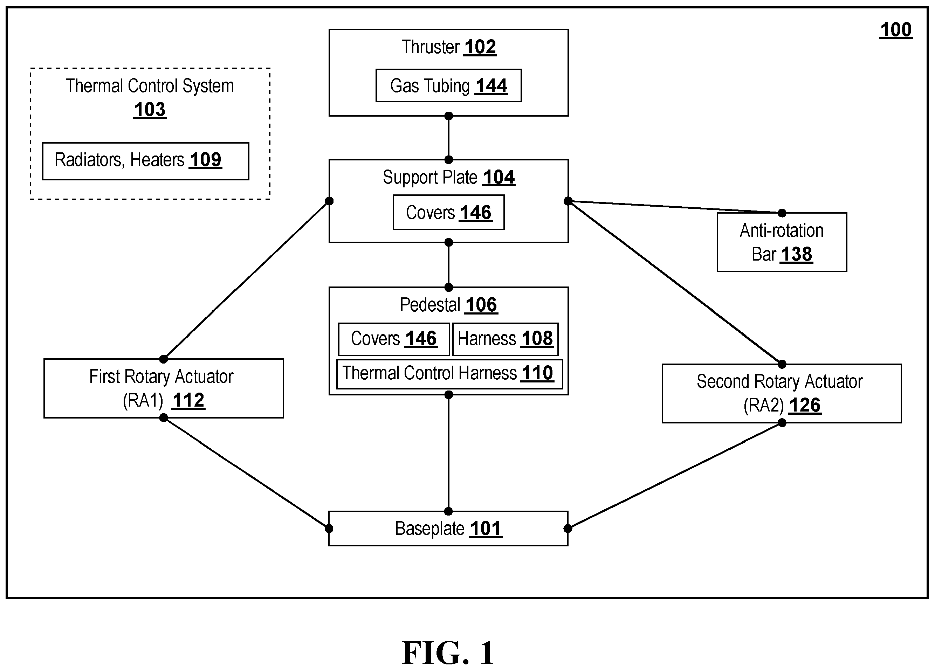

Referring now to Figure 1, shown therein is a block diagram of a two-axis pointing system 100, according to an embodiment. The system 100 includes a two-axis pointing mechanism. The system 100 of Figure 1 is a two-axis thruster pointing system because the payload of the system is a thruster, however, in other embodiment the payload may not be a thruster, and may be an antenna or any other apparatus which requires precise positioning.

In some embodiments, components of the pointing mechanism architecture, including the rotary actuators, may be similar to the systems and methods discussed in US Patent No. 9,172,128.

The two-axis pointing system 100 includes a thruster 102 with gas tubing 144, a support plate 104, a pedestal 106, a first rotary actuator 112 ("RA1"), a second rotary actuator 126 ("RA2"), harnesses for actuation including payload harness 108 and thermal control harness 110, and a thermal control system 103.

The thruster 102 is mounted to the support plate 104. The support plate 104may be physically connected to the pedestal 106 by a spherical bearing or "monoball". In other embodiments, the support plate 104 may be connected to the pedestal 106 by any connection or coupling which allows movement in more than one degree of freedom. The spherical bearing allows for rotation of the thruster 102. The pedestal 106 is physically connected to a platform or baseplate 101. The first and second rotary actuators 112 and 126 are also physically connected to the baseplate 101. The support plate 104 and thruster 102 are mobile relative to the pedestal 106 and the baseplate 101, under the control of the first and second rotary actuators 112 and 126.

The baseplate 101 may be an exterior surface of a spacecraft or may be a component which is separate from the spacecraft and attached to the spacecraft at installation.
The thruster 102 may be an electrical thruster. The thruster 102 may be a Hall Effect Thruster (HET).

The first rotary actuator 112 may be connected to a first crankshaft. Different position sensors to provide a discrete angular pointing reference, such as reed switches, potentiometer, mechanical switches, optical switches, etc. The first crankshaft may be connected to the support plate 104 at a first location through a first articulated linkage. Rotation of the first rotary actuator 112 moves the support plate 104, which points the thruster 102 in a desired direction (together with the second rotary actuator 126). The movement of the first rotary actuator 112 may be propagated to the support plate 104 through the first crankshaft and the first articulated linkage. The first rotary actuator 112 moves along a first axis controlling a first rotational degree of freedom of the support plate 104.

The second rotary actuator 126 may be connected to a second crankshaft. The second crankshaft may be connected to the support plate 104 at a second location through a second articulated linkage. Rotation of the second rotary actuator 126 moves the support plate 104, which points the thruster 102 in a desired direction (together with the first rotary actuator 112). The movement of the second rotary actuator 126 may be propagated to the support plate 104 through the second crankshaft and the second articulated linkage. The second rotary actuator 126 moves along a second axis different from the first axis, controlling a second rotational degree of freedom of the support plate 104.

A position sensor on each rotary actuator provides position feedback to the operator.

The first rotary actuator 112 is physically connected to the baseplate 101.

The second rotary actuator 126 is physically connected to the baseplate 101.

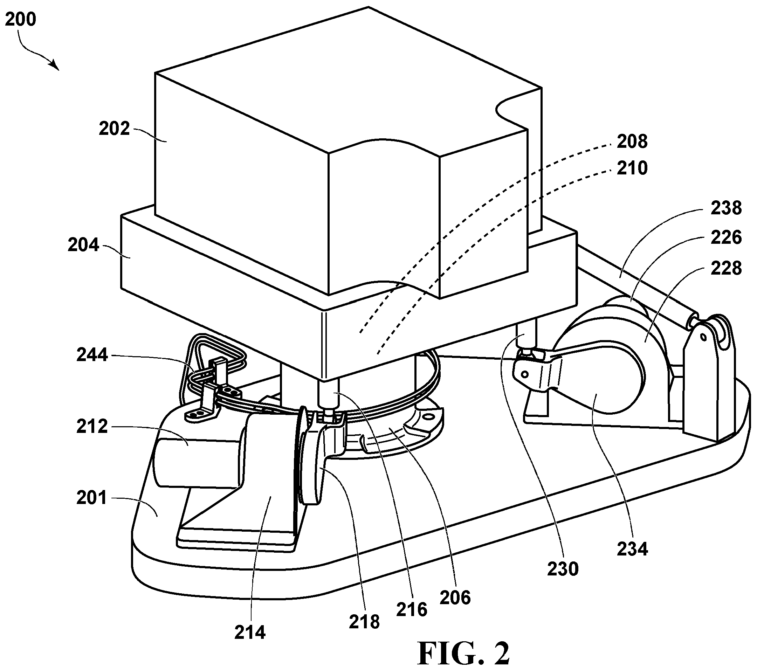

The two-axis thruster pointing system 100 includes a stowed position and a deployed position. In an embodiment with articulated linkages and crankshafts (see Figures 2-3), the stowed position system is when the articulated linkages and crankshafts form a straight line to the center of the axis of rotation of the rotary actuators 112, 126. The loads on the rotary actuators 112, 126 are shear and bending loads, with negligible torsional load.

The anti-rotation bar 138 is physically connected to the support plate 104 on one end and a static portion of the mechanism on the other end to prevent rotation of the support plate 104 by constraining a third rotational degree of freedom of the support plate 104.

The pedestal 106 may include an interior space through which various components, required for the functioning of the thruster 102, pass, including cables such as payload harness 108 and thermal control harness 110. The routing of harnesses 108 and 110 through the interior space allows for a compact and efficient form for the cables, with smaller volume of cables, shorter unsupported lengths, and protection (i.e., from MMOD) provided by the pedestal.

System 100 includes gas tubing 144 which runs around the pedestal 106 and the exterior of the support plate 104.

As various components of the system 100, for example the gas tubing 144, are outside of the pedestal 106, the system 100 further includes covers 146 that cover the harnesses 108, 110 and the tube 144 to protect the components from micrometeoroid and orbital debris (MMOD). The covers 146 also provide regulation of the temperature and reducing radiation level for the internal components by shielding from space and from the thruster 102.

System 100 also includes a thermal control system 103. The thermal control system 103 interacts with various components of the system 100 to maintain the components within their operational temperature ranges . The thermal control system 103 includes radiators, a thermal shield, heaters 109, thermistors, and could include a thermostat.

Referring now to Figure 2, shown therein is a perspective view of a two-axis thruster pointing system 200, according to an embodiment. The system 200 may be an implementation of the system 100 of Figure 1. Components of system 200 that perform the same or similar functions as components in system 100 are given similar reference numbers incremented by 100 (i.e., thruster 102, thruster 202).

System 200 is an embodiment of a two-axis pointing system wherein the payload is a thruster. In other embodiments, the payload may be anything which requires pointing.

System 200 includes thruster 202, support plate 204, and pedestal 206. Thruster 202 is physically connected to support plate 204, which is physically connected to pedestal 206, which is physically connected to the baseplate 201.

Each surface of the support plate 204 acts as a thermal radiator to radiate heat from the two-axis pointing system into space. A thermal shield is located between the thruster 202 and the support plate 204 to protect components of the two-axis pointing system from radiated heat.

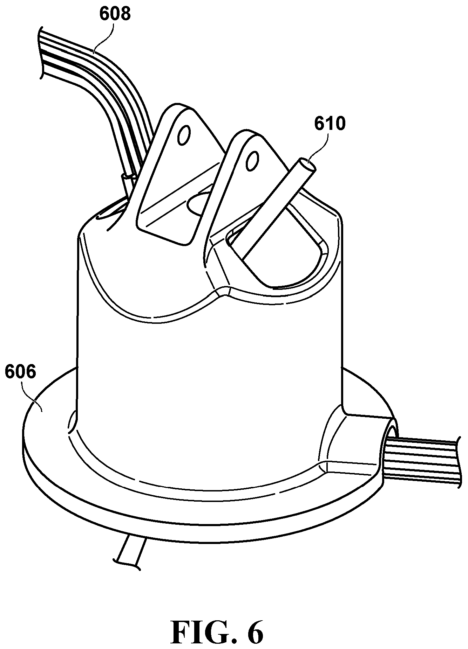

Payload harness 208 (not shown in Figure 2, but shown in Figure 6 as component 608) is a group of cables which connect the thruster to electrical (power) on the spacecraft. The payload harness 208 passes through the baseplate into an interior of the pedestal 206 and through the support plate 204 to the thruster.

Thermal control harness 210 (not shown in Figure 2, but shown in Figure 6 as component 610) is a group of cables which connects a thermal control system of the thruster 202 to the spacecraft. The thermal control harness 210 passes through the baseplate into an interior of pedestal 206 to the support plate 204 thermal control system. A first rotary actuator 212 (RA1) is positioned within RA1 support bracket 214 which is physically connected to the baseplate 201 The RA1 212 moves the support plate 204 (to point the thruster 202) through a first articulated linkage 216 which is connected to the RA1 212 by a first crankshaft 218 driven by the RA1 212.

RA1 212 may be connected to different position sensors to provide a discrete angular pointing reference for system 200.

A second rotary actuator 226 (RA2) is positioned within RA2 support bracket 228 which is physically connected to the baseplate 201. The RA2 226 moves the support plate 204 (to point the thruster 202) through a second articulated linkage 230 which is connected to the RA2 226 by a second crankshaft 232 driven by the RA2 226.

RA2 226 may be connected to different position sensors to provide a discrete angular pointing reference. for system 200.

The anti-rotation bar 238 is physically connected to the support plate 204 on one end and to a fixed portion of the mechanism on the other end. The payload of the two-axis pointing system 200 has six degrees of freedom. The spherical bearing or "monoball" which connects the support plate to the pedestal locks three degrees of freedom, the first rotary actuator 212 locks a fourth degree of freedom, the second rotary actuator 226 locks a fifth degree of freedom, and the anti-rotation bar 238 locks the sixth and final degree of freedom.

In other embodiments, the connection between the support plate and the pedestal may be any connection which allows movement. For example, in an embodiment, the connection may be a universal joint.

A gas flow control valve is used by the thruster 202. In some embodiments, the gas flow control valve may be a Xenon Flow Controller (XFC) Gas tubing 244 is connected at one end to the thruster 202. The other end of the gas tubing 244 is connected to the gas flow control valve. Gas tubing 244 wraps around the pedestal in a helical structure. Gas tubing 244 may include continuous piping to minimize pressure drop and leaking. The helical shape of the gas tubing 244 allows flexibility without couplings or corrugated piping. In Figure 2, there are two tubes, both supplying gas to the thruster 202.

As the gas tubing 244 is on the exterior of the pedestal 206 and the payload harness 208 is sometimes on an exterior of support plate 204, covers (not shown) are present on the pedestal 206 and the support plate 204 to protect the components from MMOD and may also provide some temperature regulation.

In other embodiments, more or fewer covers may be used to protect various components of the system 200.

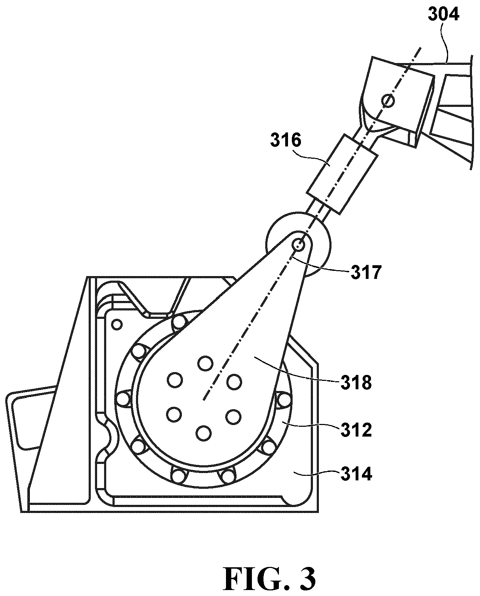

Referring now to Figure 3, shown therein is a side view of a rotary actuator 312 connected to a support plate 304 by an articulated linkage 316 of a two-axis pointing system, such as the systems 100, 200 of Figures 1-2, according to an embodiment.

Figure 3 illustrates articulated linkage 316 in the context of a rotary actuator 312, rotary actuator bracket 314, crankshaft 318, and support plate 304. Figure 3 also represents the stowed position of the components wherein the articulated linkage 316 and crankshaft 318 form a straight line (represented by red dashed line 317) to the center of the axis of the rotary actuator 312.

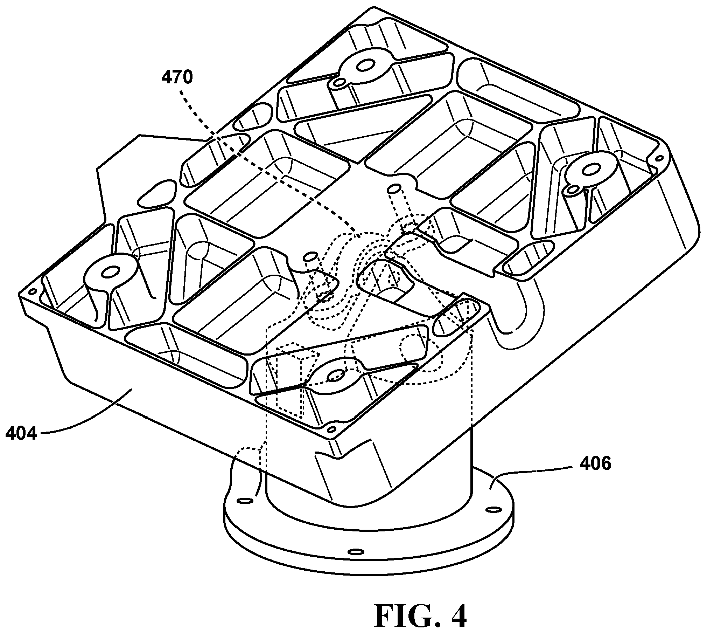

Referring now to Figure 4, shown therein is a perspective view of spherical bearing connection 470 between a pedestal 406 and a support plate 404 of a two-axis pointing system, such as the systems 100, and 200of Figures 1-2, according to an embodiment.

Support plate 404, which within a two-axis pointing system may be physically connected to and support a thruster (or other payload, e.g., thruster 202), is connected to pedestal 406, which within a two-axis pointing system may be physically connected to a baseplate, by a spherical bearing 470. The pedestal is designed to accommodate the spherical bearing 470 which may be mounted near a center of the pedestal.

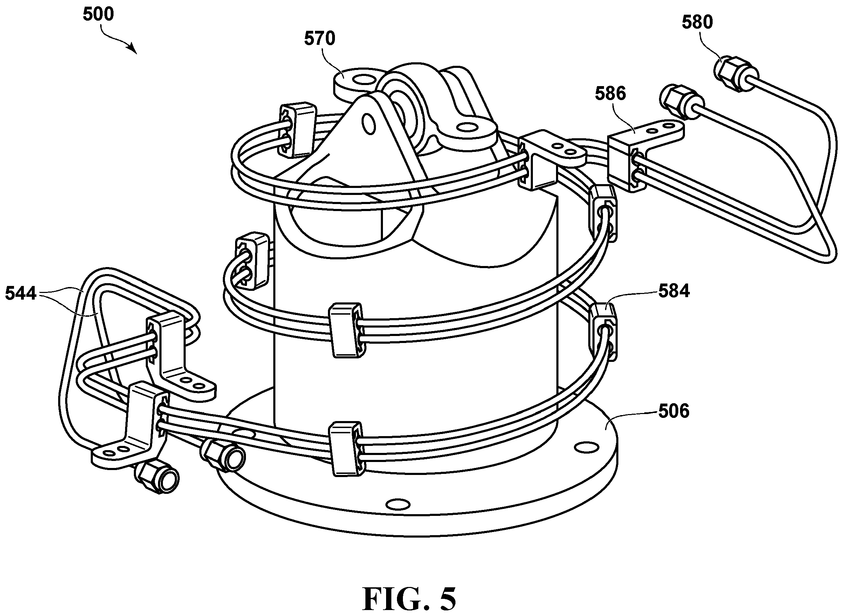

Figures 5 and 6 show a pedestal and the associated gas (Figure 5) and harness (Figure 6) systems thereon and/or therein.

Referring now to Figure 5, shown therein is a perspective view of a subset of components 500 of a two-axis pointing system, including a pedestal 506 and the associated gas system , according to an embodiment.

The spherical bearing 570 which connects a support plate (not shown) to the pedestal 506 is at a first (e.g., top) end of the pedestal 506.

On the exterior of the pedestal 506 is the gas piping 544 which provides gas to the thruster (or other payload). The gas piping 544 is in a corkscrew configuration. The gas piping may connect to the payload at payload connections 580. The gas piping 544 is also held in place by mobile clamps 584 and static clamps 586. The mobile clamps 584 can move but keep the two separate pipes of the gas piping 544 separated. The static clamps 586 hold the gas piping 544 in place against other components (not shown) of the two-axis thruster pointing system.

Referring now to Figure 6, shown therein is a perspective view of a subset of components 600 of a two-axis pointing system, including a pedestal 606 and the associated harness system.

The cables or "harnesses" of the two-axis pointing system may be either static or mobile harnesses. There are at least two static harnesses including harnesses of the rotary actuators and gas thermal control harnesses. There are at least two mobile harnesses including the payload harness and the payload thermal control harness. The static harnesses are fixed against static parts of the two-axis pointing system. The mobile harnesses move just enough to allow movement of the support plate and payload within the defined pointing range. That is, because the support plate and some components attached to the support plate are mobile, any harness attached to the support plate and/or a mobile component connected to the support plate (i.e., the payload harness and payload thermal control harness) must be mobile as well. The harnesses provide power or telemetry.

When viewing a two-axis pointing system , no harness is visible. That is, the harness cables are under MMOD covers or within brackets such as the support plate or the pedestal. The static harnesses are routed under MMOD and radiation protection.

Figure 6 shows the routing of the payload harness 608 and the thermal control harness 610 through the pedestal 606, according to an embodiment.

The payload harness 608 and the thermal control harness 610 may be circular bundles of cables.

While the above description provides examples of one or more apparatus, methods, or systems, it will be appreciated that other apparatus, methods, or systems may be within the scope of the claims.

## Claims

1. A two-axis pointing system, comprising:
a pedestal (106, 206, 406, 506, 606);
a support plate (104, 204, 304, 404) configured to support a payload (102, 202), the support plate mounted to the pedestal by a connection (470), wherein the connection allows movement of the support plate in at least two rotational degrees of freedom around a fixed pivot point;
a first rotary actuator (112, 212) physically connected to the support plate and operable to move the support plate along a first of the rotational degrees of freedom;
a second rotary actuator (126, 226) physically connected to the support plate and operable to move the support plate along a second of the rotational degrees of freedom; and
a baseplate (101, 201), wherein the pedestal, the first rotary actuator, and the second rotary actuator are fixed to the baseplate;
**characterised in that** the two-axis pointing system comprises a thermal control system (103) integrated with the support plate and configured to dissipate heat into space.

2. The system of claim 1 wherein the connection between the pedestal and the support plate is a spherical bearing.

3. The system of claim 1 wherein the connection is a universal joint.

4. The system of claim 2 or 3, further comprising:
an anti-rotation bar (138, 238) movably connected to the support plate on one end and movably connected to the baseplate of the other end to control the movement of the support plate around a third rotational degree of freedom.

5. The system of one of claims 1 to 4, comprising the payload, wherein the payload is a thruster.

6. The system of claim 5 further comprising:
at least one piping (544) routed around the exterior of the pedestal in a helical configuration to supply gas to the thruster.

7. The system of claim 6 wherein the at least one piping comprises a single piece.

8. The system of one of claims 1 to 7, wherein the system further comprises a plurality of harnesses (108, 608) for supplying at least one of power and telemetry for actuation of the system, and at least one harness of the plurality of harnesses is routed through the pedestal.

9. The system of claim 8 wherein at least one harness of the plurality of the harnesses is mobile to allow for movement of the support plate during pointing.

10. The system of one of claims 1 to 9, wherein the thermal control system includes a radiator attached to the support plate.

11. The system of one of claims 1 to 9, wherein at least one surface of the support plate acts as a thermal radiator.

12. The system of one of claims 1 to 11, wherein the thermal control system includes a thermal shield attached to the support plate between the support plate and the payload.

13. The system of one of claims 1 to 12, wherein the thermal control system includes at least one heater (109).

14. The system of claim 13 wherein the thermal control system includes at least one thermistor to manage temperature.

15. The system of one of claims 1 to 14, wherein the first rotary actuator and the second rotary actuator are configured to hold the payload in place during launch and transportation.

## Patentansprüche

1. Zwei-Achsen-Ausrichtsystem, das umfasst:
einen Sockel (106, 206, 406, 506, 606);
eine Trägerplatte (104, 204, 304, 404), die zum Tragen einer Nutzlast (102, 202) ausgeführt ist,
wobei die Trägerplatte über eine Verbindung (470) an dem Sockel montiert ist und die Verbindung Bewegung der Trägerplatte in wenigstens zwei rotatorischen Freiheitsgraden um einen festen Drehpunkt herum ermöglicht;
einen ersten Drehantrieb (112, 212), der physisch mit der Trägerplatte verbunden ist und betätigt werden kann, um die Trägerplatte entlang eines ersten der rotatorischen Freiheitsgrade zu bewegen;
einen zweiten Drehantrieb (126, 226), der physisch mit der Trägerplatte verbunden ist und betätigt werden kann, um die Trägerplatte entlang eines zweiten der rotatorischen Freiheitsgrade zu bewegen; sowie
eine Grundplatte (101, 201), wobei der Sockel, der erste Drehantrieb und der zweite Drehantrieb an der Grundplatte befestigt sind;
**dadurch gekennzeichnet, dass**
das Zwei-Achsen-Ausrichtsystem ein Thermalkontrollsystem (103) umfasst, das integral mit der Trägerplatte ausgebildet und so ausgeführt ist, dass es Wärme in den Weltraum ableitet.

2. System nach Anspruch 1, wobei die Verbindung zwischen dem Sockel und der Trägerplatte ein Sphärolager ist.

3. System nach Anspruch 1, wobei die Verbindung ein Universalgelenk ist.

4. System nach Anspruch 2 oder 3, das des Weiteren umfasst:
eine Verdrehsicherung (138, 238), die mit der Trägerplatte an einem Ende beweglich verbunden ist und mit der Grundplatte an dem anderen Ende beweglich verbunden ist, um die Bewegung der Trägerplatte um einen dritten rotatorischen Freiheitsgrad herum zu regulieren.

5. System nach einem der Ansprüche 1 bis 4, das die Nutzlast umfasst, wobei die Nutzlast ein Triebwerk ist.

6. System nach Anspruch 5, das des Weiteren umfasst:
wenigstens eine Leitung (544),die wendelförmig um die Außenseite des Sockels herum geführt wird, um dem Triebwerk Gas zuzuführen.

7. System nach Anspruch 6, wobei die wenigstens eine Leitung aus einem Stück besteht.

8. System nach einem der Ansprüche 1 bis 7, wobei das System des Weiteren eine Vielzahl von Kabelbäumen (108, 608) für Stromzufuhr oder/und Telemetrie zur Betätigung des Systems umfasst, und wobei wenigstens ein Kabelbaum der Vielzahl von Kabelbäumen durch den Sockel geführt wird.

9. System nach Anspruch 8, wobei wenigstens ein Kabelbaum der Vielzahl von Kabelbäumen mobil ist und Bewegung der Trägerplatte beim Ausrichten zulässt.

10. System nach einem der Ansprüche 1 bis 9, wobei das Thermalkontrollsystem einen an der Trägerplatte angebrachten Radiator einschließt.

11. System nach einem der Ansprüche 1 bis 9, wobei wenigstens eine Fläche der Trägerplatte als ein Kühlradiator dient.

12. System nach einem der Ansprüche 1 bis 11, wobei das Thermalkontrollsystem eine Wärmeabschirmung einschließt, die an der Trägerplatte zwischen der Trägerplatte und der Nutzlast angebracht ist.

13. System nach einem der Ansprüche 1 bis 12, wobei das Thermalkontrollsystem wenigstens eine Heizeinrichtung (109) einschließt.

14. System nach Anspruch 13, wobei das Thermalkontrollsystem wenigstens einen Thermistor zur Temperaturregelung einschließt.

15. System nach einem der Ansprüche 1 bis 14, wobei der erste Drehantrieb und der zweite Drehantrieb so konfiguriert sind, dass sie die Nutzlast bei Start und Transport fixieren.

## Revendications

1. Système de pointage à deux axes, comprenant :
un piédestal (106, 206, 406, 506, 606) ;
une plaque de support (104, 204, 304, 404) configurée pour supporter une charge utile (102, 202), la plaque de support étant montée sur le piédestal par un raccord (470), dans lequel le raccord permet un mouvement de la plaque de support selon au moins deux degrés de liberté en rotation autour d'un point de pivot fixe ;
un premier actionneur rotatif (112, 212) physiquement raccordé à la plaque de support et opérationnel pour déplacer la plaque de support le long d'un premier des degrés de liberté en rotation ;
un second actionneur rotatif (126, 226) physiquement raccordé à la plaque de support et opérationnel pour déplacer la plaque de support le long d'un deuxième des degrés de liberté en rotation ; et
une plaque de base (101, 201), dans lequel le piédestal, le premier actionneur rotatif et le second actionneur rotatif sont fixés à la plaque de base ;
**caractérisé en ce que** le système de pointage à deux axes comprend un système de régulation thermique (103) intégré à la plaque de support et configuré pour dissiper de la chaleur vers l'espace.

2. Système selon la revendication 1, dans lequel le raccord entre le piédestal et la plaque de support est un palier sphérique.

3. Système selon la revendication 1, dans lequel le raccord est un joint universel.

4. Système selon la revendication 2 ou 3, comprenant en outre :
une barre anti-rotation (138, 238) raccordée de manière mobile à la plaque de support sur une extrémité et raccordée de manière mobile à la plaque de base sur l'autre extrémité afin de commander le mouvement de la plaque de support autour d'un troisième degré de liberté en rotation.

5. Système selon l'une des revendications 1 à 4, comprenant la charge utile, dans lequel la charge utile est un propulseur.

6. Système selon la revendication 5, comprenant en outre :
au moins une tuyauterie (544) acheminée autour de l'extérieur du piédestal selon une configuration hélicoïdale afin d'alimenter le propulseur en gaz.

7. Système selon la revendication 6, dans lequel ladite au moins une tuyauterie comprend une pièce unique.

8. Système selon l'une des revendications 1 à 7, dans lequel le système comprend en outre une pluralité de faisceaux de câbles (108, 608) destinés à fournir au moins l'une parmi une puissance et une télémétrie pour actionnement du système, et au moins un faisceau de câbles de ladite pluralité de faisceaux de câbles est acheminé à travers le piédestal.

9. Système selon la revendication 8, dans lequel au moins un faisceau de câbles de la pluralité de faisceaux de câbles est mobile afin de permettre un mouvement de la plaque de support lors du pointage.

10. Système selon l'une des revendications 1 à 9, dans lequel le système de régulation thermique comporte un radiateur attaché à la plaque de support.

11. Système selon l'une des revendications 1 à 9, dans lequel au moins une surface de la plaque de support agit comme un radiateur thermique.

12. Système selon l'une des revendications 1 à 11, dans lequel le système de régulation thermique comporte un bouclier thermique attaché à la plaque de support entre la plaque de support et la charge utile.

13. Système selon l'une des revendications 1 à 12, dans lequel le système de régulation thermique comporte au moins un élément chauffant (109).

14. Système selon la revendication 13, dans lequel le système de régulation thermique comporte au moins une thermistance pour gérer la température.

15. Système selon l'une des revendications 1 à 14, dans lequel le premier actionneur rotatif et le second actionneur rotatif sont configurés pour maintenir la charge utile en place pendant le lancement et le transport.
